# EUROPEAN PATENT APPLICATION

(11) **EP 1 383 339 A1**
(43) Date of publication of application: **21.01.2004**
(21) Application number: 02015606.3
(22) Date of filing: 15.07.2002
(51) Int. Cl.: H04N 7/50, H04N 7/36

(54) **Memory management method for video sequence motion estimation and compensation**

(71) Applicant: MATSUSHITA ELECTRIC INDUSTRIAL CO., LTD., Kadoma-shi, Osaka 571-8501 (JP)
(72) Inventor: Schlockermann, Martin, 63322 Roedermark (DE); Schuur, Bernhard, 55130 Mainz (DE); Kadono, Shinya, Nishinomiya, 663-8113 (JP)
(74) Representative: Grünecker, Kinkeldey, Stockmair & Schwanhäusser Anwaltssozietät

(57) **Abstract**

A memory management control for a memory section is provided for use in a motion estimation or a compensation unit using a plurality of reference images. The plurality of reference images is stored in a memory section providing a memory area for each of the reference images. Each of the memory areas being adapted to store video data of one frame including a top field and a bottom field. The storage of video data in the memory section is controlled by a memory control section. A storage enable flag is assigned to each of the memory areas to enable the storage of image data of two successive fields in a single memory area.

## Description

The present invention generally relates to the memory management control for a multi-frame buffer used for motion estimation and motion compensation employed in video coding.

Motion pictures are being adopted in an increasingly number of applications ranging from a video telephony and video conferencing to DVD and digital television. When motion pictures are being transmitted, a substantial amount of data has to be sent through conventional transmission channels of a limited available frequency bandwidth. In order to transmit the digital data through the limited channel bandwidth, it is inevitable to compress or reduce the volume of the transmission data.

In order to enable inter-operability between systems designed by different manufacturers for any given application, video coding standards have been developed for comprising the amount of video data. Video coding standards are denoted with H.26x for ITU-T standards and with MPEG-x for ISO/IEC standards.

The underlying coding approach of most of the standards consist of the following main stages:
1. Dividing each video frame into blocks of pixels so that a processing of the video frame can be conducted at a block level.
2. Reducing spatial redundancies within a video frame by subjecting the video data of a block to a transformation, quantization and entropy coding.
3. Exploiting temporal dependencies between blocks of subsequent frames in order to only transmit changes between subsequent frames.
   This is accomplished by employing a motion estimation and compensation technique. For any given block, a search is performed in previously coded and transmitted frames to determine a motion vector which will be used by the encoder and decoder to predict the image data of a block.

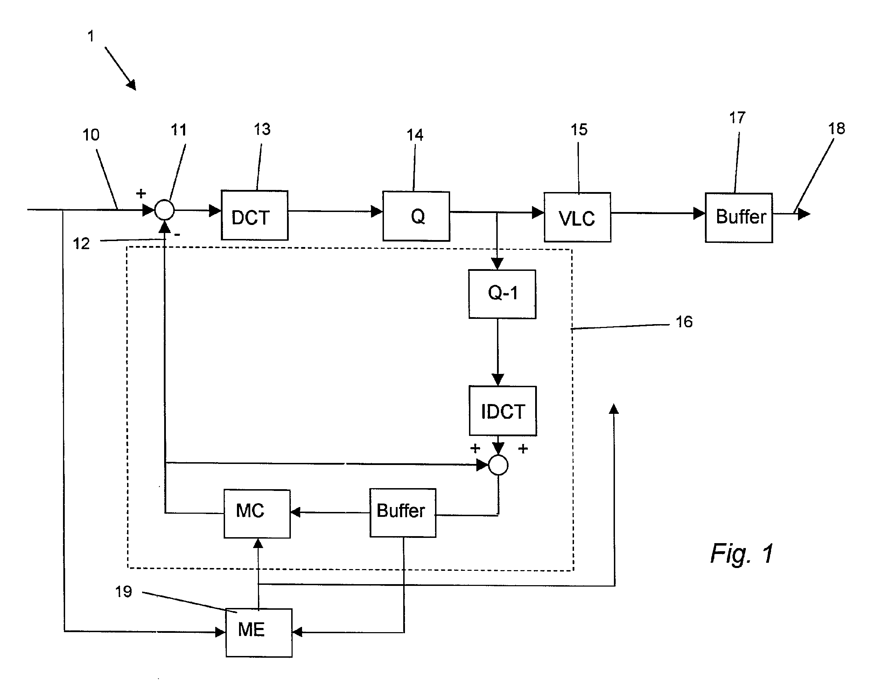

An example of a video encoder configuration is illustrated in Fig.1. The shown video encoder, generally denoted with reference numeral 1, comprises a transform unit 13 to transform the spatial image data to the frequency domain, a quantization unit 14 to quantize the transform coefficients provided by transform unit 13, a variable length coder 15 for entropy encoding the quantized transform coefficients, and a video buffer 17 for adapting the compressed video data having a variable bit rate to a transmission channel which may have a fixed bit rate.

The encoder shown in Fig. 1 employs a DPCM (differential pulse code modulation) approach by only transmitting differences between subsequent fields or frames. These differences are obtained in subtractor 11 which receives the video data 10 to be encoded and subtracts the previous image 12 thereform. The previous image 12 is obtained by decoding the previously encoded image (the "currently decoded image"). This is accomplished by a decoder 16 which is incorporated into video encoder 1. The decoder 16 performs the encoding steps in a reverse manner, i.e. decoder 16 comprises an inverse quantizer (Q-1), an inverse transform unit (IDCT) and an adder for adding the decoded changes to the previously decoded image to produce the previous image as it will be obtained on the decoding side.

In motion compensated DPCM, current frame or field data is predicted from the corresponding previous frame data based on an estimation of the motion between the current and the previous frames. Such estimated motion may be described in terms of two-dimensional motion vectors representing the displacement of pixels between the previous and current frames. Usually, motion estimation is performed on a block-by-block basis wherein a block in a current frame is compared with blocks in its previous frames until a best match is determined. Based on the comparation result, an inter-frame displacement vector for a whole block can be estimated for the current frame. For this purpose, a motion estimation unit ME 19 is incorporated into the encoder together with a corresponding motion compensation unit MC included into the decoding path.

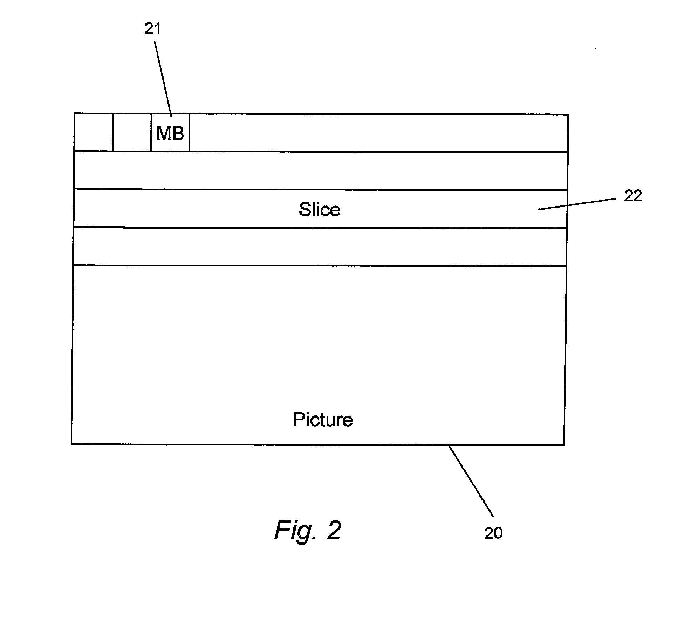

The video encoder of Fig. 1 is operated as follows. A given video image of a video signal 10 is divided into a number of small blocks, usually denoted as "macroblocks". For example, the video image 20 shown in Fig. 2 is divided into a plurality of macroblocks 21. Each of the macroblocks usually has a size of 16x16 pixels.

In addition, the picture is divided into a number of "slices" 22 which are used for resynchronization purposes in case of data losses. Each slice consists of a plurality of macroblocks, wherein the arrangement of macroblocks forming one slice is not restricted to the example shown in Fig. 2 but any other combination of macroblocks is possible.

When encoding the video data of an image by only reducing spatial redundancies within the image, the resulting frame is referred to as an l-picture. I-pictures are typically encoded by directly applying the transform to the macroblocks of a frame. Encoded l-pictures are large in size as no temporal information is exploited to reduce the amount of data.

In order to take advantage of temporal redundancies that exists between successive images, a prediction and coding between subsequent fields or frames is performed based on motion estimation and compensation. When a selected reference frame in motion estimation is a previously encoded frame, the frame to be encoded is referred to as a P-picture. In case both, a previously encoded frame and a future frame, are chosen as reference frames, the frame to be encoded is referred to as a B-picture.

According to the emerging H.26L standard currently being under development, motion compensation on each 16x16 macro block can be performed using a number of different block sizes. Individual motion vectors may be determined for blocks having 4x4, 4x8, 8x4, 8x8, 8x16, 16x8 or 16x16 pixels. The availability of small motion compensation blocks improve the ability to handle fine motion details.

Based on the result of the motion estimation operation, the motion compensation operation provides a prediction based on the determined motion vector. The information contained in a prediction error block resulting from the predicted block is then transformed into transform coefficients in transform unit 13. Generally, a two-dimensional DCT (discrete cosine transform) is employed. The resulting transform coefficients are quantized and finally entropy encoded (VLC) in entropy encoding unit 15.

The transmitted stream of compressed video data 18 is received by a decoder which reproduces the sequence of encoded video images based on the received data. The decoder configuration corresponds to that of decoder 16 included within the encoder of Fig. 1. A detailed description of a decoder configuration is therefore omitted.

Newer video encoding standards offer the option of having multiple reference frames for inter-picture encoding resulting in a more efficient coding of images. For this purpose, a motion estimation unit and a motion compensation unit employ a multi-frame buffer for providing several reference pictures. The motion vector is accompanied by additional information indicating the respective reference image.

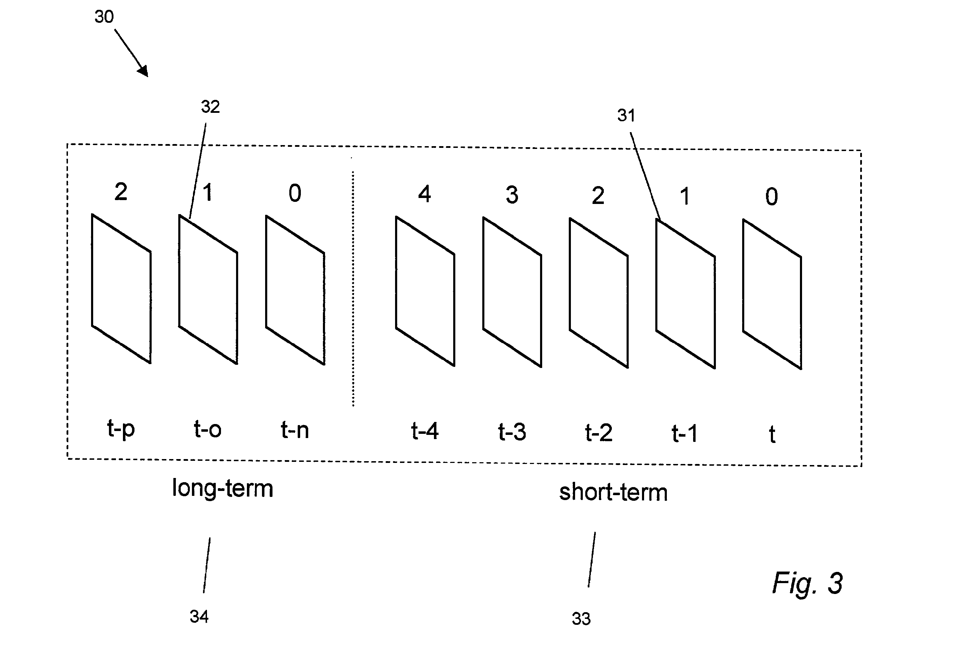

An internal configuration of a multi-frame buffer is shown in Fig.3, generally denoted by reference numeral 30. The multi-frame buffer comprises a plurality of memory areas 31, 32 for storing frames of a video signal. The memory areas of the multi-frame buffer 30 may be divided into two distinct kinds of memory areas, namely memory areas of a short term portion 33 and of a long term portion 34.

The multi-frame buffer stores the appropriate selection of reference pictures for encoding or decoding a particular image. The storage procedure of reference pictures is divided into two operational stages, namely (1) a reference picture reordering and (2) a reference picture buffering.
(1) The reference picture ordering is based on reference picture ordering information sent at the slice layer. The reference picture ordering only effects the encoding or decoding process of macroblocks of a single slice.
(2) The reference picture buffering controls the buffering of a currently encoded or decoded picture when updating the reference pictures stored in the multi-frame buffer for each encoding/decoding operation.

For the reference picture buffering, one of two different memory management control modes may be employed, either the "sliding window buffering mode" or the "adaptive memory control buffering mode".

In the sliding window buffering mode, each currently encoded or decoded image is added to the multi-frame buffer. The pictures of the short term portion of the multi-frame buffer are periodically replaced by new images based in a First-In-First-Out (FIFO) manner. As long as the buffer has sufficient capacity of unused memory areas, no image data have to be deleted for storing new image data of a currently processed image. If all "unused" memory areas of the multi-frame buffer are filled with new image data of previously processed images, the image which has been stored first will be replaced by the new image data of the currently encoded/decoded image. To accomplish this image replacement operation, indexes are assigned to each of the memory areas representing their temporal order.

In the adaptive memory control buffering mode, each image added to the multi-frame buffer or removed therefrom is explicitly selected. The memory control is performed in accordance with memory management control operation parameters securing a corresponding memory management control at the encoder and decoder sides.

These memory management control modes still have a number of problems. In particular, conventional memory management control modes do not allow to efficiently handle interlaced video data.

Accordingly, it is the object of the present invention to provide a motion estimation unit, a moving picture coding apparatus, a method for controlling an image memory of a motion estimation unit and a method for controlling an image memory of a motion compensation unit which efficiently control the reference images of a multi-frame buffer when processing interlaced video data.

This is achieved for a motion estimation unit by the features of claim 1, for a method for controlling an image memory for a motion estimation unit by the features of claim 8, for a motion compensation unit by the features of claim 14, and for a method for controlling image memory of a motion compensation unit by the features of claim 23.

According to a first aspect of the present invention, a motion estimation unit is provided which determines a motion vector for an image area of a current image with respect to an image area of one of a plurality of reference images. The motion estimation unit comprises a memory section and a memory control section. The memory section has a plurality of memory areas storing a plurality of reference images. Each of the memory areas being adapted to store video data of one frame including a top field and a bottom field. The memory control section controls the storage of video data inside memory section. A storage flag is assigned to each of the memory areas. The memory control section is adapted to set each of the storage enable flags individually to allow a memory area to be rewritten by new image data.

According to a second aspect, a method for controlling an image memory of a motion estimation unit is provided. The image memory stores a plurality of reference images which are used for determining a motion vector for an image area of a current image with respect to an image area of one of the plurality of reference images. Each of said reference images being stored in an individual memory area of said image memory. Each of the individual memory areas being adapted to store a frame made up of a top field and a bottom field. The method comprises the steps of selecting particular image memory area and setting a storage enable flag for said selected memory area in order to allow said memory area to be rewritten by new image data.

According to a third aspect of the present invention, a motion compensation unit is provided for predicting an image area of a current image. The image area of the current image is predicted by using image data of an image area of one of a plurality of reference images in accordance with reference image selection information and a motion vector. The motion compensation unit comprises a memory section and a memory control section. The memory section has a plurality of memory areas for storing the plurality of reference images. Each of the memory areas being adapted to store video data of one frame including a top field and a bottom field. The memory control section controls the storage of video data in the memory section. A storage enable flag is assigned to each of the memory areas. The memory control section being adapted to said each of the storage enable flags individually in order to allow a memory area to be rewritten by new image data.

According to a fourth aspect, a method for controlling an image memory of a motion compensation unit is provided. The image memory stores a plurality of reference images which are used for predicting an image area of a current image using image data of an image area of one of a plurality of reference images in accordance with reference image selection information and a motion vector. Each of the reference images is stored in a memory area of the image memory. Each of the individual memory areas are adapted to store a frame made up of a top field and a bottom field. The method comprises the steps of selecting a particular memory area and setting a storage enable flag for the selected memory area in order to allow the memory area to be rewritten by new image data.

It is a particular advantage of the present invention that the same memory used for the processing of frame base video sequences may be used for field based video sequences. Each of the memory areas adapted for a frame is used to store two fields. Each of the fields may be written or read out separately, but the memory control section assigns a common storage enable flag to each pair of fields.

Although the motion estimation and compensation procedures are performed on a field bases, the effort for controlling the multi-frame buffer is not increased in accordance with the number of additional images to be handled.

According to a preferred embodiment, the memory is divided into a short term portion and a long term portion and individual fields of the short term portion may be shifted to the long term portion. In particular, a field may be shifted to any of the top and bottom field positions of the long term portion. Consequently, the long term memory portion may have a smaller size as each frame based memory area may be used to store separate fields not resulting from the same frame. A plurality of different long term reference fields may be stored in the long term portion in order to allow a provision of additional image reference information on a field basis without increasing the long term storage capacity. In particular, the storage efficiency may be improved by only selecting a single field of a frame at the expense of limiting a long term reference to a particular field of a frame.

Further preferred embodiments of the present invention are the subject-matter of dependent claims.

Other embodiments and advantages of the present invention will become more apparent from the following description of preferred embodiments given in conjunction with the accompanying drawings, in which:
- Fig. 1: illustrates a block diagram of a motion compensated DPCM video encoder;
- Fig. 2: illustrates a sub-division of a video image for the encoding and decoding processing;
- Fig. 3: generally illustrates a configuration of a multi-frame buffer used for motion estimation and motion compensation;
- Fig. 4: illustrates the data stored in connection with a single memory area;
- Fig. 5: is a block diagram of a motion estimation/motion compensation unit; and
- Fig. 6: exemplifies a method for controlling a multi-frame buffer.

Referring to Fig. 3, the general configuration of a multi-frame buffer is illustrated. The multi-frame buffer 30 comprises a plurality of memory areas 31, 32 storing reference images each of which consisting of two fields, a top field and a bottom field.

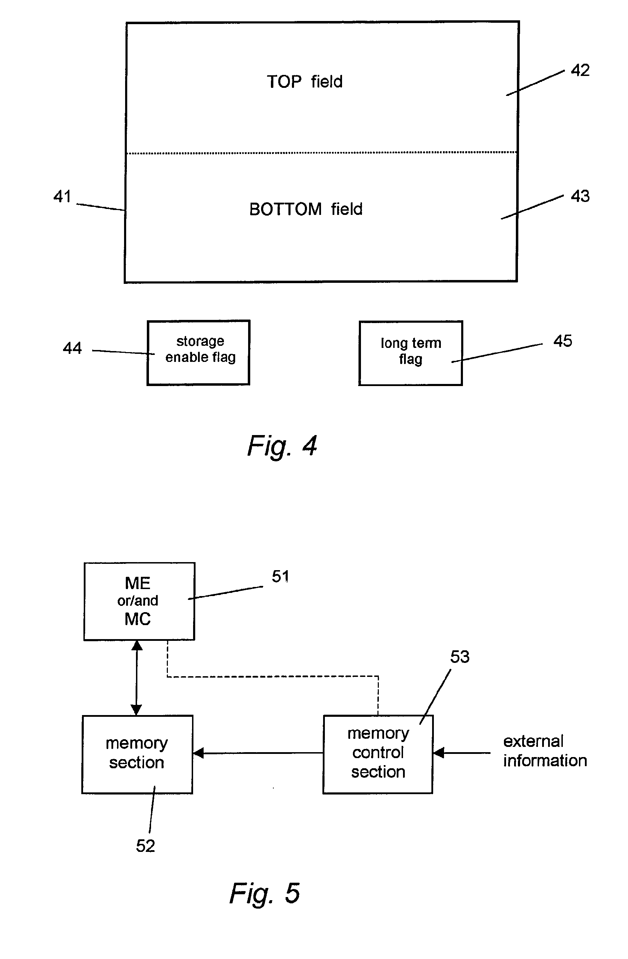

The data stored in connection with each of the memory areas 31, 32 is shown in Fig. 4. Each memory area 41 is adapted to store the image data of a top field 42 and a bottom field 43 wherein the field data may be written and read out separately.

The provision of the appropriate reference images for motion estimation and motion compensation is accomplished by a memory control section 53 as shown in Fig. 5. After termination of each image encoding or decoding operation, the multi-frame buffer 52 is updated in accordance with memory control information. Memory areas which may be used for storing new image data, i.e. the currently encoded or decoded image, are marked accordingly by setting a particular storage enable flag 44 assigned to each of the memory areas. Reference images further needed for the motion estimation or motion compensation operation of subsequent images are maintained in the frame buffer by keeping the storage enable flag unset. For removing an image from the multi-frame buffer 52, the storage enable flag 44 is set to the "unused" state.

The storage enable flag may be either stored in the multi-frame buffer 52 or, alternatively, stored in association with the corresponding memory areas of the multi-frame buffer in the memory control section 53. By only providing a single storage enable flag 44 for each pair of top and bottom fields, there is no additional hardware required for handling interlaced video data.

In addition, a long term flag 45 may be assigned to each memory area 41. The flag 45 may be either provided in the multi-frame buffer 52 or stored in association with each memory area in memory control section 53. By the provision of long term flags 45, each memory area may store long term reference images. Thus, by setting long term flag 45, a shift operation of an image from the short term portion 33 to the long term portion 34 may be realized.

In a preferred embodiment of the present invention, a long term memory area 34 is adapted to store at each of the top and bottom field positions 42, 43 either a top or a bottom field, resulting in an improved efficiency for storing long term image data. This may be accomplished by providing two storage enable flags for each of the long term memory areas in order to be able to denote each field position as "unused".

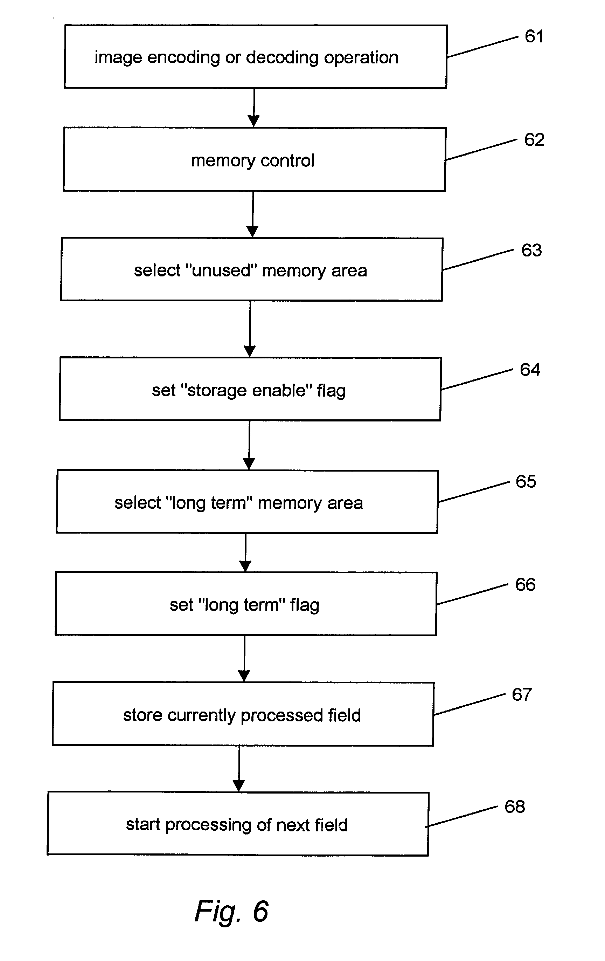

An exemplary method of memory management control is illustrated in Fig. 6. After termination of an image encoding or decoding operation indicated by step 61, the multi-frame buffer memory control process is initiated at step 62. In a first step 63, memory areas storing two fields which are not needed for the processing of subsequent fields are selected and the storage enable flag 45 is set correspondingly to "unused" at step 64. Thus, the memory space for each pair of unused fields is enabled to be rewritten by new image data. This selection is based on memory control information received from the video encoder. The video encoder may generate such control information based on the definition in the employed encoding standard.

In addition, the memory control information selects those memory areas which contain long term image data (step 65). The long term flag 45 of these memory areas is set accordingly at step 66.

Depending on the memory control parameters, the currently processed field will be stored at the respective "unused" field position of a memory area at step 67 before the encoding or decoding processing is resumed at step 68.

Summarizing, the present invention relates to a motion estimation and a compensation unit using a plurality of reference images. The plurality of reference images is stored in a memory section providing a memory area for each of the reference images. Each of the memory areas being adapted to store video data of one frame including a top field and a bottom field. The storage of video data in the memory section is controlled by a memory control section. A storage enable flag is assigned to each of the memory areas to enable the storage of image data of two successive fields in a single memory area.

## Claims

1. A motion estimation unit for determining a motion vector for an image area of a current image with respect to an image area of one of a plurality of reference images, said motion estimation unit comprising:
a memory section (52) having a plurality of memory areas (31,32) for storing said plurality of reference images, each of said memory areas (31,32) being adapted to store video data of one frame including a top field (42) and a bottom field (43), and
a memory control section (53) for controlling the storage of video data in said memory section (52) wherein a storage enable flag (44) is assigned to each of the memory areas (31,32) and said memory control section (53) being adapted to set each of the storage enable flags (44) individually to allow a memory area (31,32) to be rewritten by new image data.

2. A motion estimation unit according to claim 1, wherein said memory section (52) being divided into a first portion (33) and a second portion (34) and said memory control section (53) being adapted to control a shift operation of an image from an image area (31) of the first portion (33) to an image area (32) of the second portion (34).

3. A motion estimation unit according to claim 2, wherein said memory control section (53) being further adapted to shift a single field of a frame from a memory area (31) of the first portion (33) to a memory area (32) of the second portion (34).

4. A motion estimation unit according to claim 3, wherein said memory control section (53) being adapted to shift any field from a memory area (31) of the first portion (33) to either a top field position or a bottom field position of a memory area (32) of the second portion (34).

5. A motion estimation unit according to any of claims 2 to 4, wherein a long term flag (45) being assigned to each of said memory areas (31,32) and said memory control section (53) being further adapted to control a division of the memory areas (31,32) of said memory section (52) into said first and said second portions (33,34) by setting each of the long term flags (45) individually.

6. A motion estimation unit according to any of claims 1 to 5, wherein said memory control section (53) being adapted to control a write or read operation of image data on a field basis.

7. A moving picture coding apparatus for compressing a sequence of successive images, comprising a motion estimation unit (17) according to any of claims 1 to 6.

8. A method for controlling an image memory of a motion estimation unit, said image memory storing a plurality of reference images used for determining a motion vector for an image area of a current image with respect to an image area of one of said plurality of reference images, each of said images being stored in an individual memory area of said image memory and each of the individual memory areas being adapted to store a frame made up of a top field and a bottom field, said method comprising the steps of selecting (63) a particular memory area and setting (64) a storage enable flag for said selected memory area allowing said memory area to be rewritten by new image data.

9. A method according to claim 8, wherein said image memory being divided into a first portion and a second portion and said method further comprising the step of shifting (65,66) image data from an image area of the first portion to an image area of the second portion.

10. A method according to claim 9, wherein said shifting step (65,66) shifting a single field of a frame from a memory area of the first portion to a memory area of the second portion.

11. A method according to claim 10, wherein said shifting step (65,66) shifting any field from a memory area of the first portion to either a top field position or a bottom field position of a memory area of the second portion.

12. A method according to any of claims 8 to 11, wherein a long term flag being assigned to each of said memory areas and said method further comprising the step of setting (66) each of the long term flags individually in order to control a division of the memory areas of said memory section into said first and said second portions.

13. A method according to any of claims 8 to 12, further comprising the step of controlling a writing or reading of image data on a field basis.

14. A motion compensation unit for predicting an image area of a current image by using image data of an image area of one of a plurality of reference images in accordance with reference image selection information and a motion vector, said motion compensation unit comprising:
a memory section (52) having a plurality of memory areas (31,32) for storing said plurality of reference images, each of said memory areas (31,32) being adapted to store video data of one frame including a top field (42) and a bottom field (43), and
a memory control section (53) for controlling the storage of video data in said memory section (52) wherein a storage enable flag (44) is assigned to each of the memory areas (31,32) and said memory control section (53) being adapted to set each of the storage enable flags (44) individually to allow a memory area (31,32) to be rewritten by new image data.

15. A motion compensation unit according to claim 14, wherein said memory section (52) being divided into a first portion (33) and a second portion (34) and said memory control section (53) being adapted to control a shift operation of an image from an image area (31) of the first portion (33) to an image area (32) of the second portion (34).

16. A motion compensation unit according to claim 15, wherein said memory control section (53) being further adapted to separately shift a single field of a frame from a memory area (31) of the first portion (33) to a memory area (32) of the second portion (34).

17. A motion compensation unit according to claim 16, wherein said memory control section (53) being adapted to shift any field from a memory area (31) of the first portion (33) to either a top field position or a bottom field position of a memory area (32) of the second portion (34).

18. A motion compensation unit according to any of claims 14 to 17, wherein a long term flag (45) being assigned to each of said memory areas (31,32) and said memory control section (53) being further adapted to control a division of the memory areas (31,32) of said memory section (52) into said first and said second portions (33,34) by setting each of the long term flags (45) individually.

19. A motion compensation unit according to any of claims 14 to 18, wherein said memory control section (53) being adapted to control a write or read operation of image data on a field basis.

20. A moving picture coding apparatus for compressing a sequence of successive images, comprising a motion estimation unit (17) according to any of claims 1 to 6 and a motion compensation unit (MC) according to any of claims 14 to 19.

21. A moving picture coding apparatus according to claim 20, wherein the motion estimation unit (17) and the motion compensation unit (MC) share a single memory section (52) and memory control section (53).

22. A moving picture decoding apparatus for decoding compressed video data into a sequence of successive images, comprising a motion compensation unit according to any of claims 14 to 19.

23. A method for controlling an image memory of a motion compensation unit, said image memory storing a plurality of reference images used for predicting an image area of a current image by using image data of an image area of one of a plurality of reference images in accordance with reference image selection information and a motion vector, each of said reference images being stored in a memory area of said image memory and each of the individual memory areas being adapted to store a frame made up of a top field and a bottom field, said method comprising the steps of selecting (63) a particular memory area and setting (64) a storage enable flag for said selected memory area allowing said memory area to be rewritten by new image data.

24. A method according to claim 23, wherein said image memory being divided into a first portion and a second portion and said method further comprising the step of shifting (65,66) image data from an image area of the first portion to an image area of the second portion.

25. A method according to claim 24, wherein said shifting step (65,66) shifting a single field of a frame from a memory area of the first portion to a memory area of the second portion.

26. A method according to claim 25, wherein said shifting step (65,66) shifting any field from a memory area of the first portion to either a top field position or a bottom field position of a memory area of the second portion.

27. A method according to any of claims 24 to 26, wherein a long term flag being assigned to each of said memory areas and said method further comprising the step of setting (66) each of the long term flags individually in order to control a division of the memory areas of said memory section into said first and said second portions.

28. A method according to any of claims 23 to 27, further comprising the step of controlling a writing or reading of image data on a field basis.
